(19) **Europäisches Patentamt / European Patent Office / Office européen des brevets**

(11) **EP 1 850 271 B1**

(12) **EUROPEAN PATENT SPECIFICATION**

(45) Date of publication and mention
of the grant of the patent:
**09.09.2009 Bulletin 2009/37**

(51) Int Cl.:
*G06K 9/66* (2006.01)   *G06T 5/00* (2006.01)
*H04N 5/253* (2006.01)   *H04N 7/01* (2006.01)

(21) Application number: **07013135.4**

(22) Date of filing: **29.01.2003**

(54) **Method for video mode classification**

Verfahren zur Klassifizierung des Videomodus

Procédé de classification de mode vidéo

(84) Designated Contracting States:
**DE FR GB**

(43) Date of publication of application:
**31.10.2007 Bulletin 2007/44**

(62) Document number(s) of the earlier application(s) in
accordance with Art. 76 EPC:
**03001861.8 / 1 443 453**

(73) Proprietor: **SONY DEUTSCHLAND GMBH**
**10785 Berlin (DE)**

(72) Inventor: **Unruh, Christian**
**70327 Stuttgart (DE)**

(74) Representative: **Müller - Hoffmann & Partner**
**Patentanwälte**
**Innere Wiener Strasse 17**
**81667 München (DE)**

(56) References cited:
WO-A-95/24017        US-A- 5 497 196
US-A- 6 064 775      US-A1- 2002 140 843
US-A1- 2002 149 703

- WISCHERMANN G: "DAS DIGITALE WETGATE. DIE DRITTE NOISE-REDUCER-GENERATION VON PHILIPS BTS" FERNSEH UND KINOTECHNIK, VDE VERLAG GMBH. BERLIN, DE, vol. 50, no. 7, 1 July 1996 (1996-07-01), pages 387-390, XP000623232 ISSN: 0015-0142
- WILLIAMS C K I ET AL: "COMBINING BELIEF NETWORKS AND NEURAL NETWORKS FOR SCENE SEGMENTATION" IEEE TRANSACTIONS ON PATTERN ANALYSIS AND MACHINE INTELLIGENCE, IEEE SERVICE CENTER, LOS ALAMITOS, CA, US, vol. 24, no. 4, April 2002 (2002-04), pages 467-483, XP001144047 ISSN: 0162-8828

**Description**

The invention relates to a method for video content classification, and in particular to a method for video context classification based on image content classification / identification.

The performance of picture improvement (PI) techniques, i.e. an increase of the overall picture quality depends strongly on the content of the image or video to be improved. The content of the image or video here refers to. e.g. camera mode, film mode, a scene change, etc.

The content of an image or video depends on many parameters, e.g. spatial and/or temporal information of the current image. The influence of the content of the image or video on the different parameters is generally difficult to describe. This is a problem, if the content of an image or video must be identified or classified using a set of parameters to identify the content of an image or video.

Currently, the content of an image or video is determined by a simple threshold identification/classification. Thereby, a hand-tuned "try and error"- identification/classification is performed. This means that the optimization of the identification/classification using a given set of parameters describing the content of the image is very time-consuming. Further, since the identification/classification is hand-tuned, only a limited set of data can be examined. The success rate for identification/classification is therefore very low when using the prior art method for identification/classification.

From Wischermann G: "Das digitale Wetgate. Die dritte Noise-Reducer-Generation von Philips BTS". Fernseh- und Kinotechnik, VDE-Verlag GmbH Berlin. DE, vol. 50. no. 7. 1 July 1996. pages 387 - 390. the noise-reducer-technology is described and several kinds of filter techniques are shown. Linear and transversal filtering is used for suppressing artefacts in moving images. Furthermore, non-linear filtering is used for suppressing noise. A digital wet gate is used for reducing the effects of dust or dirt on film material as well as of scratches thereon. The respective dirt filter detects and suppresses such errors of the material and limits the suppression effects to the areas actually containing said errors.

In International Patent Application WO 95/24017 "A Top Down Preprocessor for a Machine Vision System" discloses an image recognition and classification system including a preprocessor in which a "top-down" method is used to extract features from an image, an associative leaning neural network system, which groups the features into patterns and classifies the patterns, and a feedback mechanism which improves system performance by tuning preprocessor scale, feature detection, and feature selection.

From US 2002/0149703 A1 a de-interlacing system is known, which converts an interlaced video stream into a progressive video stream. A respective image processing apparatus comprises an image quality control instructing means, an image data recognizing means, a process operator characteristics holding means, an image process operator determining means and an image processing means. An underlying intra-frame de-interlacer is connected to a progressive source pattern and quality detector on one hand and with a field assembly on the other hand.

It is an object of the invention to provide a method for video content classification, which is less time consuming, and wherein no hand-tuned identification/classification of the image or video is needed.

To achieve this objective, the invention provides a method for video content classification according to claim 1. In addition, the invention provides a video content classification system, a computer program product, and a computer readable storage medium defined in claims 10, 11 and 12. Further features and preferred embodiments are respectively defined in respective subclaims and/or in the following description.

For generating said image content classification/identification data, preferably, a trainable classification method is used.

Preferably, said trainable classification method is based on an artificial neural network and/or a Bayesian belief network.

Advantageously, said image content classification/identification data is generated to be descriptive for one or any combination of the following image modes and/or types:

- motion sequence,
- static images, in particular no-motion,
- camera-mode,
- film-mode,
- noise level,
- scene change, and
- lightning conditions of current image, in particular dark, medium dark, normal, medium-bright and/or bright image.

For generating said image content classification/identification data, preferably, a feature vector is used, which is generated from said image data.

Advantageously, said feature vector is generated to contain spatial and/or temporal information.

Further, in a preferred embodiment said spatial information is generated to contain information about noise measurement, average picture level, histogram analysis, and/or other features used in spatial content analysis.

Said temporal information is thereby preferably generated to contain information about motion estimation, and/or other features used in temporal content analysis.

A training of said trainable classification method is advantageously performed as supervised training wherein a target information is said image content classification/identification data and an input information is said feature vector.

A video content classification system according to the present invention is capable of performing or realizing a method for video content classification as defined above and/or the steps thereof.

A Computer program product according to the present invention, comprises computer program means adapted to perform and/or to realize the method for video content classification according to the present invention as defined above and/or the steps thereof, when it is executed on a computer, a digital signal processing means, and/or the like.

A Computer readable storage medium according to the present invention comprises a computer program product as defined above.

The invention and advantageous details thereof will be explained by way of an exemplary embodiment thereof in the following with reference to the accompanying drawings, in which

Fig. 1  is a block diagram, which shows the main steps performed according to an embodiment of the invention.

Fig. 2  is a block diagram, which shows a different view of the main steps performed according to an embodiment of the invention.

Fig. 3  is a block diagram, which shows the steps performed within an image content/classification step.

Fig. 4  is a block diagram, which shows the steps performed within an image content feature analysis step.

Fig. 5  is a block diagram, which shows the steps performed within a spatial content analysis step.

Fig. 6  is a block diagram, which shows the steps performed within a temporal content analysis step.

Fig. 7  depicts the structure of an artificial neural network ANN.

Fig. 8  depicts a detailed view of the different layers of the artificial neural network ANN.

Fig. 9  is a block diagram illustrating the training of the artificial neural net-work ANN.

Fig. 10  shows the motion phases in a film mode.

Fig. 11  shows the motion phases in a camera mode.

Fig. 12  shows the steps performed within the temporal content analysis step, for the case of a video-mode classification/identification.

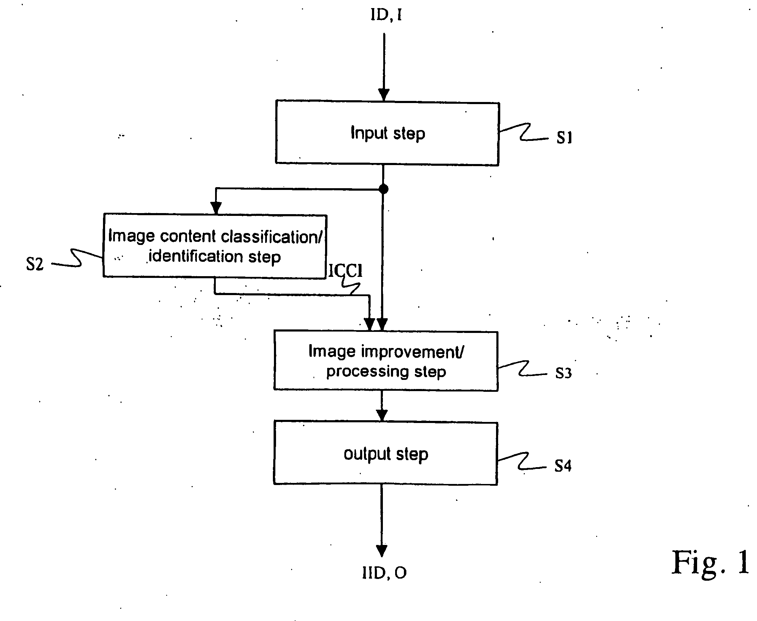

In Fig. 1 image data ID is received as input data I in an input step S1. The received image data ID is used as input for an image content identification/classification step S2. The output of the image content identification/classification step S2 is image content classification/identification data ICCI. The input data ID and the image content classification/identification data ICCI are used as input for an image improvement/processing step S3. The output of the image improvement/processing step S3 is received by an output step S4, which outputs improved image data IID as output data O.

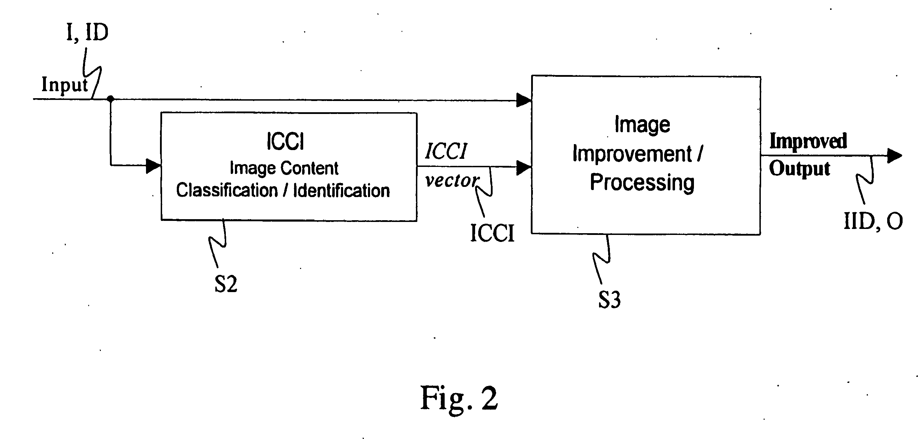

In Fig. 2 the image data ID is used directly as input for the image content classification/identification step S2 and as input for the image improvement/processing step S3. Again, in the image content classification/identification step S2 the image content classification/identification data ICCI is generated, which is used as input for the image improvement/processing step S3. The image content classification/identification data ICCI describes the content of the image data ID to be improved. The image data ID is generated from an image to be improved, therefore classifying/ identifying the content of the image data ID is equivalent to classifying/identifying the underlying image. The output O of the system, i.e., the output of the image improvement/processing step S3 is the improved image data IID which is equivalent to the improved picture.

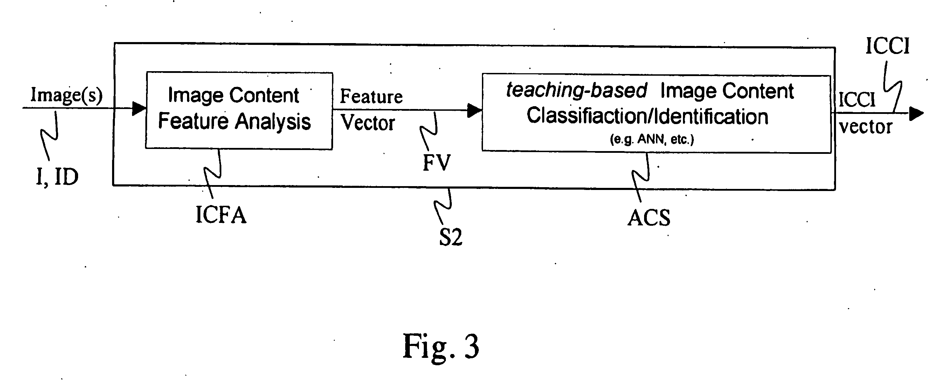

Fig. 3 shows a block diagram to illustrate the steps performed within the image content classification/identification step S2. An image content feature analysis step ICFA receives the image data ID as input and outputs a feature vector FV. This feature vector FV is used in an automatic classification step ACS to generate the image content classification/identification data ICCI. As mentioned above, the image content classification/identification data ICCI describes the content of the image data ID. This means that within the automatic classification step ACS the feature vector FV is used to classify the input data ID. For a classification preferably a trainable classification method is used. Such a trainable classification method can be, e.g., an artificial neural network ANN, or a Bayesian belief network BBN.

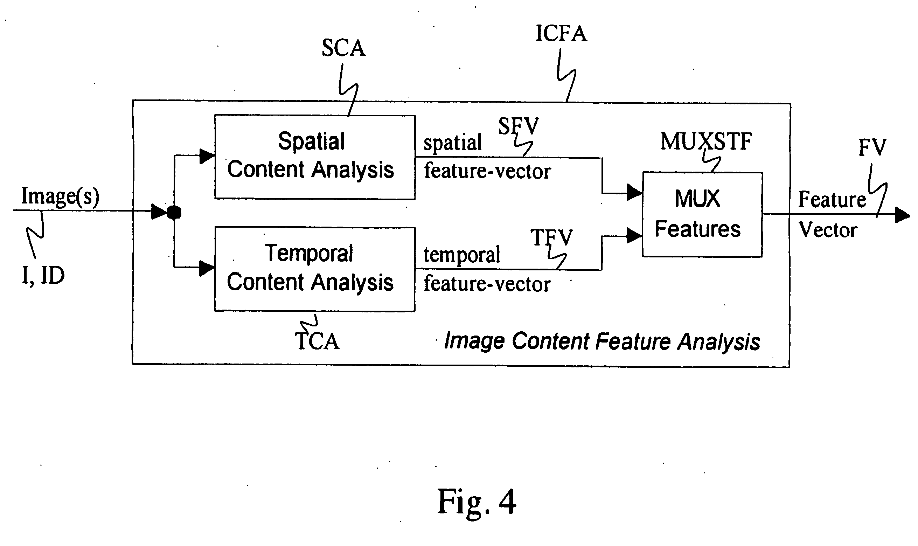

At hand of Fig. 4 the steps performed within the image content feature analysis step ICFA will be explained. As mentioned above, the input for the image content feature analysis step ICFA is the image data ID. From this image data ID a spatial feature vector SFV is generated in a spatial content analysis step SCA. In parallel, a temporal feature vector TFV is generated in a temporal content analysis step TCA. Both feature vectors are multiplexed, i.e. combined, in a spatial and temporal multiplexing step MUXSTF. The output of this step is the feature vector FV. It should be noted that the spatial content analysis step SCA or the temporal content analysis step TCA may be omitted. In this case, the feature vector FV only contains information from the temporal feature vector TFV or from the spatial feature vector SFV.

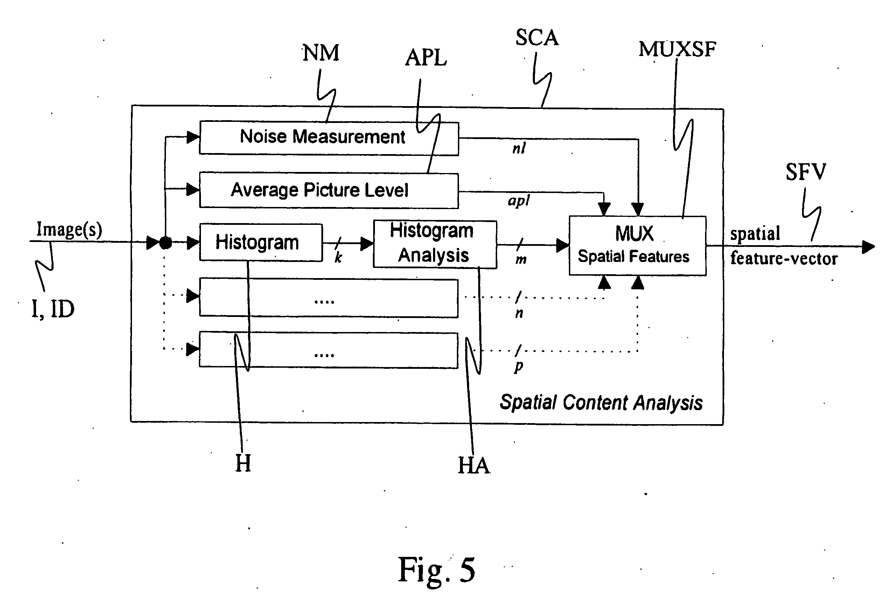

Fig. 5 shows the steps performed within the spatial content analysis step SCA. Within the spatial content analysis step SCA the following steps are performed, whereby for each step the image data ID is used as input:

- a noise measurement step NM, generating noise measurement features nl,
- an average pixel level analysis step, which is the same as a picture level analysis, generating average pixel level features APL,
- a histogram generating step H, which generates a histogram of the image data ID and outputs histogram data k. This histogram data k is used in a histogram analysis step HA which outputs histogram analysis features m;
- further steps relating to spatial content analysis, that means the extraction, generation, and analysis of the image content in the spatial domain, whereby other spatial content analysis features n, p are generated.

All of the output data, i.e., the noise measurement features n1, the average pixel level features APL, the histogram analysis features m, and the other spatial content analysis features n, p, are multiplexed in a spatial multiplexing step MUXSF to yield the spatial feature vector SFV. Multiplexing here refers to the combination of the different above-mentioned features to a single vector, the spatial feature vector SFV, which is given by

$$
\textit{spatial feature vector} = \left( nl, apl, \underbrace{m_0, m_1, ..., m_{m-2}, m_{m-1}}_{m}, \underbrace{n_0, n_1, ..., n_{n-2}, n_{n-1}}_{n}, ...; \underbrace{p_0, p_1, ..., p_{p-2}, p_{p-1}}_{p}, \right) \quad (1)
$$

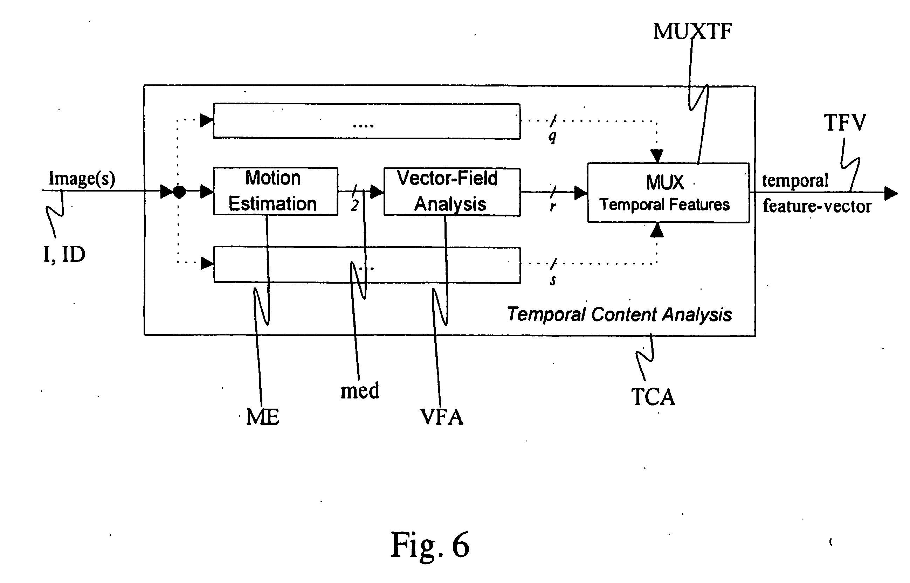

Fig. 6 depicts the different steps performed within the temporal content analysis step TCA. Within the temporal content analysis step TCA the following steps are performed, whereby in each step the image data ID is used as input:

- A motion estimation step ME outputting motion estimation data med, which motion estimation data med is used as input for a vector field analysis step VFA outputting vector field analysis features r;
- further steps relating to temporal content analysis, which further steps output other temporal content analysis features q, s. The vector field analysis feature temporal multiplexing step MUXTF to yield the temporal feature vector TFV. Again, here multiplexing means to combine the different temporal features, i.e., the vector field analysis feature r, and the other temporal content analysis features q, s. The temporal feature vector TFV is therefore given as follows:

$$
\textit{temporal feature vector} = \left( ..., \underbrace{q_0, q_1, ..., q_{q-2}, q_{q-1}}_{q}, \underbrace{r_0, r_1, ..., r_{r-2}, r_{r-1}}_{r}, \underbrace{s_0, s_1, ..., s_{s-2}, s_{s-1}}_{s}, ... \right) \quad (2)
$$

As explained above at hand of Fig. 4, the spatial feature vector SFV and the temporal feature vector TFV are combined in the spatial and temporal multiplexing step MUXSTF to yield the feature vector FV. Thus, the feature vector FV is given by

*feature vector*

$$= \left( \underbrace{nl, apl, m_0, ..., m_{m-1}, n_0, ..., n_{n-1}, \cdot \cdot \cdot, p_0, ..., p_{p-1}}_{\text{spatial feature vector}}, \underbrace{\cdot \cdot \cdot, q_0, ..., q_{q-1}, r_0, ..., r_{r-1}, s_0, ..., s_{s-1}}_{\text{temporal feature vector}} \right) \qquad (3)$$

As mentioned above, the feature vector FV is used as input vector IV for the automatic classification step ACS. Within the automatic classification step ACS any technique of complex linear/non-linear correlation analysis of input and output data may be used, e.g., an artificial neural network ANN or a Bayesian belief network BBN. In a preferred embodiment of the invention an artificial neural network ANN is used for classification/identification of the input vector IV, i.e., a complex non-linear correlation analysis is performed. The main advantage of using an artificial neural network ANN for a classification is its capability to "learn" the classification from a set of training data which consists of pairs of input vectors IV and target vectors TV. As mentioned above, the input vector IV is the feature vector FV. The target vector TV contains the information about the image content classification/identification for a respective input vector IV, i.e. the aspired image content classification/identification.

The use of an artificial neural network ANN in the context of the invention has the great advantage that the artificial neural network ANN can be adopted to changing conditions quickly while still achieving a high degree of reliability with respect to the aspired classification/identification of the image data ID.

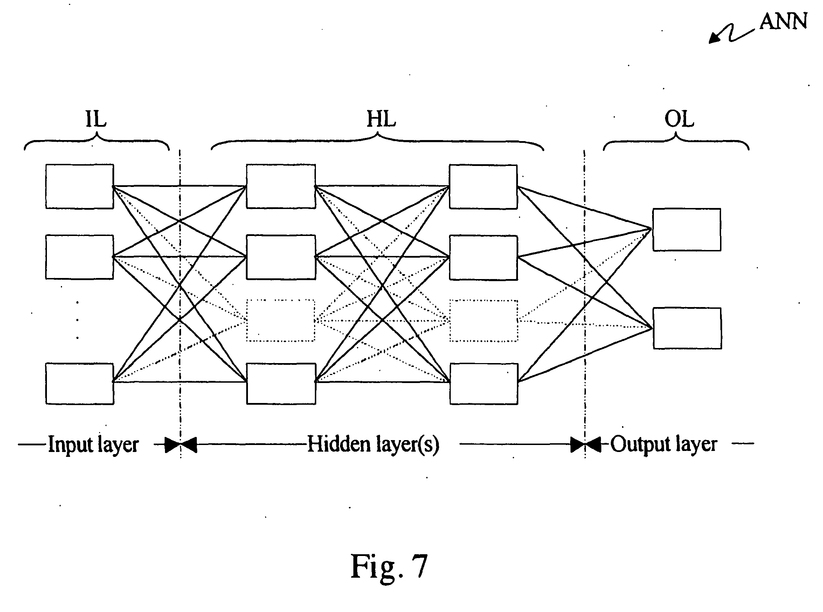

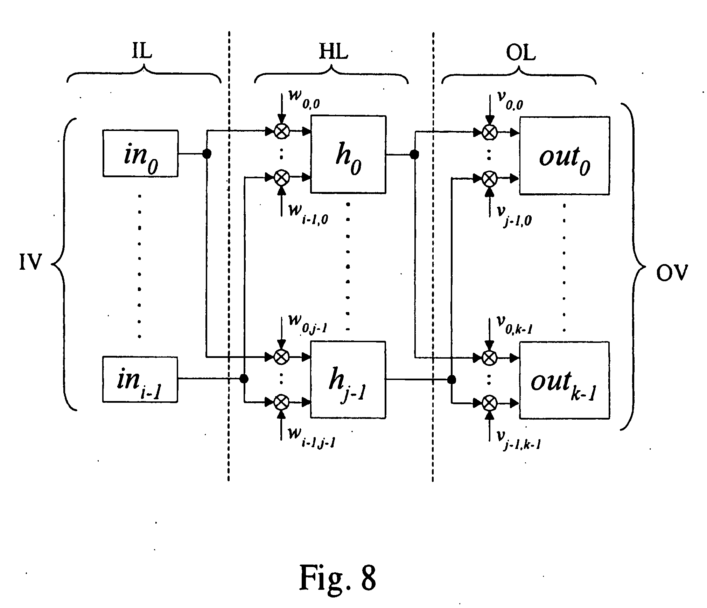

Fig. 7 shows the general structure of the artificial neural networks ANN. The network consists of an input layer IL, one or more hidden layers HL, and an output layer OL. Figure 8 shows the detailed structure of the used artificial neural network ANN. In the input layer IL the

$$\text{Input vector } IV = \begin{bmatrix} in_0 \\ \cdot \\ \cdot \\ in_{i-1} \end{bmatrix} \qquad (4)$$

is used as input. The hidden layer HL consists of hidden neurons $h_0, ..., h_{j-1}$. The input of the hidden neurons $h_0, ..., h_{j-1}$ is given by

$$\begin{bmatrix} h_0 \\ \cdot \\ \cdot \\ h_{j-1} \end{bmatrix} = \begin{bmatrix} w_{0,0} & \cdot & \cdot & w_{i-1,0} \\ \cdot & \cdot & \cdot & \cdot \\ \cdot & \cdot & \cdot & \cdot \\ w_{0,j-1} & \cdot & \cdot & w_{i-1,j-1} \end{bmatrix} \cdot \begin{bmatrix} in_0 \\ \cdot \\ \cdot \\ in_{i-1} \end{bmatrix} \qquad (5)$$

During training of the artificial neural network ANN the weights $w_{0,0}, ... , w_{i-1,0}. w_{0,j-1}, ...., w_i-1.j-1$ as indicated in connection with the hidden layer HL of Fig. 8 are adapted during training.

The output vector OV of the output layer OL is given by

$$\begin{bmatrix} out_0 \\ \cdot \\ \cdot \\ out_{k-1} \end{bmatrix} = \begin{bmatrix} v_{0,0} & \cdot & \cdot & v_{j-1,0} \\ \cdot & \cdot & \cdot & \cdot \\ \cdot & \cdot & \cdot & \cdot \\ v_{0,k-1} & \cdot & \cdot & v_{j-1,k-1} \end{bmatrix} \cdot \begin{bmatrix} h_0 \\ \cdot \\ \cdot \\ h_{j-1} \end{bmatrix} \qquad (6)$$

During training the weights $v_{0,0}, ..., v_{J-1.0}, v_{0.k-1}, ..., v_{j-1.k-1}$ and the weights $w_{0.0}, ..., w_{1-1.0}, w_{0,j-1}, ..., w_{1-l,j-1}$ are adapted. Each hidden cell/unit, i.e. hidden neuron, of the artificial neural network ANN has an activation function $f_{act}$. This activation function describes how the result/output of each cell/unit can be derived from the corresponding input data. The output of a cell/unit of the hidden layer is given by

$$h_j = f_{act}\left(\sum_{n=0}^{i-1}(in_n \cdot w_{n,j})\right) \qquad\qquad (7)$$

The learning process, supervised learning, typically some kind of back propagation, is performed using the above-mentioned pairs of input vectors IV and target vectors TV. As mentioned above, the input vector IV is the feature vector FV and the target vector TV contains flags denoting the correct, i.e., aspired, classification/identification of the image data ID. The training and simulation of the artificial neural network ANN may be realized by a state of the art artificial neural network simulator as, e.g., the Stuttgart Neural Network Simulator SNNS. The simulator SNNS solves the equations (5) und (6) of the complex non-linear input $\rightarrow$ hidden layer $\rightarrow$ output correlation.

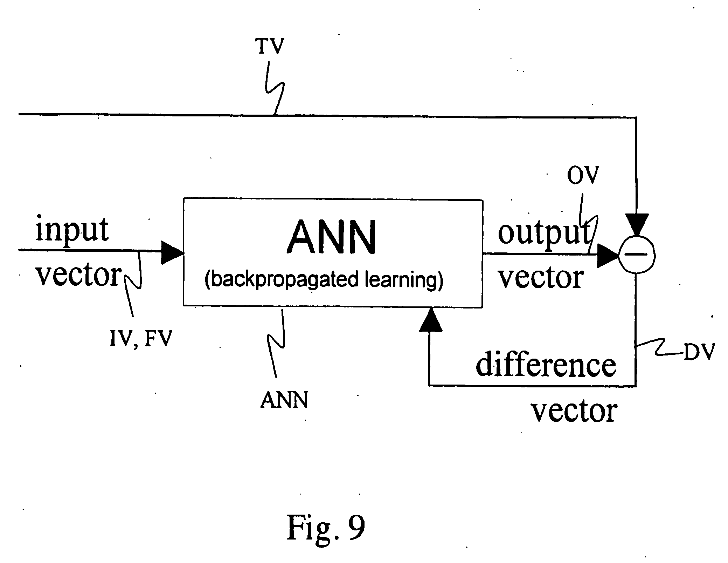

During training of the artificial neural network ANN the back propagation algorithm is used, which is depicted in Fig. 9. Thereby, a difference vector DV is used for adjusting the weights (coefficients). The difference vector DV is computed by subtracting a target vector TV from the corresponding output vector OV of the artificial neural network ANN. The target vector TV contains the respective aspired image content classification/identification for the input vector IV.

In the following, an example for the classification/identification of image data ID is given. In the example, the following modes will be classified/identified:

- No motion, i.e., still picture;
- film mode, i.e., 25 motion phases within a 50 Hz signal, motion between consecutive frames;
- camera mode, i.e., 50 motion phases within a 50 Hz signal, motion between consecutive fields;

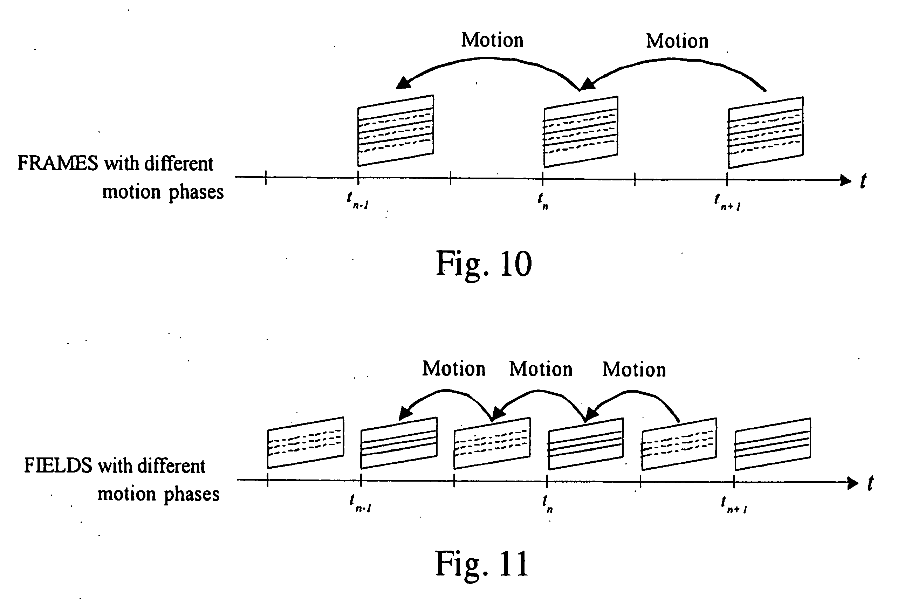

Fig. 10 depicts the motion phases in film mode and Fig. 11 depicts the motion phases in a camera mode. In camera mode, in a stream of fields, there is motion between two consecutive fields, and in film mode there in only motion between frames.

Based on the correct and reliable classification/identification of the above-mentioned video modes the post-processing modules within the image improvement/processing step S3 are adjusted accordingly. These processing modules can be some kind of picture improvement (PI) techniques that use the classification/identification in order to increase the overall performance.

As explained in connection with Fig. 4 the feature vector FV contains the spatial feature vector SFV from the spatial content analysis step SCA and the temporal feature vector TFV from the temporal content analysis step TCA. However, in the example considered here, whereby different video modes are classified/identified, only the temporal content analysis step TCA is performed.

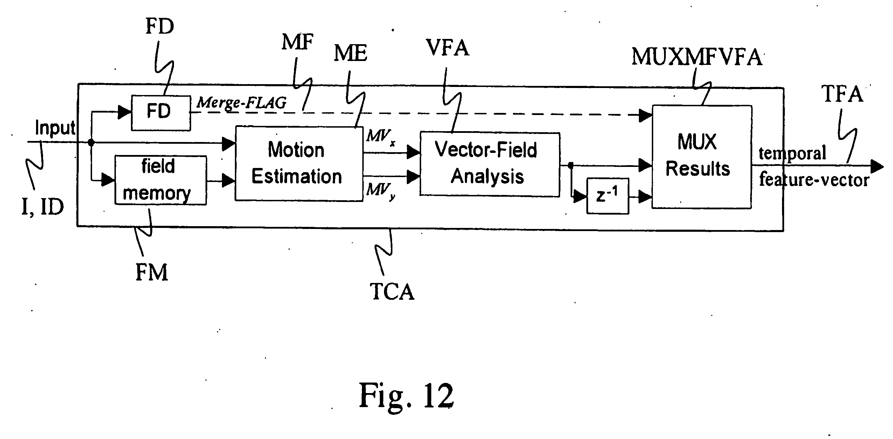

Fig. 12 shows an exemplary embodiment of the temporal content analysis step TCA with respect to the example where different video modes are classified.

The input for the temporal content analysis step TCA is the image data ID, which is converted to a stream of fields using a field memory FM. The motion estimator ME then estimates the motion between two consecutive fields. The results of the ME are two vector fields that represent the horizontal motion $MV_x$ and the vertical motion $MV_y$. Both vector-fields are analyzed in the vector-field analysis step. Within this step, the following number of occurrences are determined:

$MV_x$: Positive x vectors
$MV_x$: Negative x vectors
$MV_x$: ZERO x vectors
$MV_y$: Positive y vectors
$MV_y$: Negative y vectors
$MV_y$: ZERO y vectors

Therefore a set of 6 values is generated for each motion estimation ME. The result (6 values) of the previous 'Vector-field analysis' is stored in a buffer $z^{-1}$. As soon as a field of a new frame is next, in a frame detector step a valid Merge Flag MF is sent out. In a merge flag and vector field analysis data multiplexing step MUXMFVFA, the result of the current 'Vector-field Analysis' and the previous results, which are stored in the buffer $z^{-1}$, are multiplexed, but only if the merge flag MF is valid.

By doing this, a set of 12 values is generated and the result is the 'temporal feature vector' or simply 'feature vector' due to the fact that the image feature content analysis step ICFA consists only of the temporal content analysis step TCA. This feature vector is now used to train the articial neural network ANN with a target vector that contains 3 components (No Motion, FILM-Mode and CAMERA-Mode). This means for classification the output vector OV of the artificial neural network ANN contains the information about the automatically classified video mode.

As mentioned above, the current invention is not limited to the embodiment described above (Video-mode classification/identification). The reliability of this embodiment could furthermore increased if additional temporal content analysis is done and/or spatial content analysis is added.

**Reference Symbols**

| | |
|---|---|
| ACS | automatic classification step |
| ANN | artificial neural network |
| APL | average pixel level analysis step |
| apl | average pixel level feature |
| DV | difference vector |
| FD | frame detector |
| FM | field memory |
| FV | feature vector |
| H | histogram generating step |
| HA | histogram analysis step |
| HL | hidden layer |
| I | input data |
| ICCI | image content classification/identification data |
| ICFA | image content feature analysis step |
| ID | image data |
| IID | improved image data |
| IL | input layer |
| IV | input vector |
| m | histogram analysis features |
| ME | motion estimation step |
| med | motion estimation data |
| MF | merge flag |
| MUXMFVFA | merge flag and vector field analysis data analysis step |
| MUXSF | spatial multiplexing step |
| MUXSTF | spatial and temporal multiplexing step |
| MUXTF | temporal multiplexing step |
| n,p | other spatial content analysis features |
| nl | noise measurement features |
| NM | noise measurement step |
| O | output data |
| OL | output layer |
| OV | output vector |
| q,s | other temporal content analysis features |
| r | vector-field analysis features |
| S1 | input step |
| S2 | image content classification/identification step |
| S3 | image improvement/processing step |
| S4 | output step |
| SCA | spatial content analysis step |
| SFV | spatial feature vector |
| TCA | temporal content analysis step |
| TFV | temporal feature vector |
| TV | target vector |
| VFA | vector-field analysis step |

**Claims**

1. A method for video mode classification, wherein said video comprises a sequence of images (I), each of said images (I) consisting of respective image data (ID), comprising:

   generating a feature vector (FV) based on said image data (ID), wherein said feature vector is descriptive of temporal and/or spatial features of at least one of said images (I);
   generating image content classification/identification data (ICCI) based on said feature vector (FV) and based on a trainable classification method; and
   classifying said video mode based on said image content classification/identification data (ICCI).

2. The method according to claim 1,
   wherein said feature vector (FV) comprises a spatial feature vector (SFV), which is descriptive of spatial information of said image data (ID) of at least one of said images (I).

3. The method according to claim 2.
   wherein said spatial information is generated to contain information about at least one of noise measurement (NM), average picture level (APL), histogram analysis (HA), and other features used in spatial content analysis.

4. The method according to claims 1 to 3.
   wherein said feature vector (FV) comprises a temporal feature vector (TFV), which is descriptive of temporal information between consecutive images (I) of said sequence of images (I).

5. The method according to claim 4.
   wherein said temporal information is generated to contain information about at least one of motion estimation (ME) and other features used in temporal content analysis.

6. The method according to any of claims 1 to 5.
   wherein said trainable classification method is based on an artificial neural network (ANN).

7. The method according to any of claims 1 to 5.
   wherein said trainable classification method is based on a Bayesian belief network (BNN).

8. The method according to claims 1 to 7,
   wherein said image content classification/identification data (ICCI) is generated to be descriptive for one or any combination of the following image modes or types:

   - motion sequence.
   - static images, in particular no-motion.
   - camera-mode.
   - film-mode,
   - noise level.
   - scene change, and
   - lighting conditions of current image, in particular dark, medium dark, normal, medium-bright and/or bright image.

9. The method according to claims 1 to 8, further comprising:

   performing a training of said trainable classification method as supervised training wherein target information is said image content classification/identification data (ICCI) and input information is said feature vector (FV).

10. Video mode classification system,
    which is capable of performing a method for video mode classification according to any one of the preceding claims 1 to 9.

11. Computer program product,
    comprising computer program means adapted to perform and to realize the method for video mode classification according to any one of the claims 1 to 9. when it is executed on a computer or a digital signal processing means.

**12.** Computer readable storage medium,
comprising a computer program product according to claim 11.


**Patentansprüche**

**1.** Verfahren zur Videomodusklassifikation,
wobei das Video eine Abfolge von Bildern (I) aufweist, wobei jedes der Bilder (I) aus jeweiligen Bilddaten (ID) besteht, mit:

Erzeugen eines Merkmalsvektors (FV) auf der Grundlage der Bilddaten (ID), wobei der Merkmalsvektor für die zeitlichen und/oder räumlichen Merkmale mindestens eines der Bilder (I) beschreibend ist;
Erzeugen von Bildinhaltsklassifikations-/-identifikationsdaten (ICCI) auf der Grundlage des Merkmalsvektors (FV) und auf der Grundlage eines trainierbaren Klassifikationsverfahrens; und
Klassifizieren des Videomodus auf der Grundlage der Bildinhaltsklassifikations-/-identifikationsdaten (ICCI).

**2.** Verfahren nach Anspruch 1,
wobei der Merkmalsvektor (FV) einen räumlichen Merkmalsvektor (SFV) aufweist, der für räumliche Information der Bilddaten (ID) mindestens eines der Bilder (I) beschreibend ist.

**3.** Verfahren nach Anspruch 2,
wobei die räumliche Information so erzeugt wird, dass sie Information über mindestens eine Rauschmessung (NM), einen mittleren Bildpegel (APL), eine Histogrammanalyse (HA) oder andere Merkmale, die bei einer räumlichen Inhaltsanalyse verwendet werden, enthält.

**4.** Verfahren nach den Ansprüchen 1 bis 3,
wobei der Merkmalsvektor (FV) einen zeitlichen Merkmalsvektor (TFV) aufweist, der für zeitliche Information zwischen aufeinander folgenden Bildern (I) der Abfolge von Bildern (I) beschreibend ist.

**5.** Verfahren nach Anspruch 4,
wobei die räumliche Information so erzeugt wird, dass sie Information über mindestens eine Bewegungsbewertung (ME) oder andere Merkmale, die bei der zeitlichen Inhaltsanalyse verwendet werden, enthält.

**6.** Verfahren nach einem der Ansprüche 1 bis 5,
wobei das trainierbare Klassifikationsverfahren auf einem künstlichen neuronalen Netzwerk (ANN) beruht.

**7.** Verfahren nach einem der Ansprüche 1 bis 5,
wobei das trainierbare Klassifikationsverfahren auf einem Bayes-Belief-Netzwerk (BNN) beruht.

**8.** Verfahren nach den Ansprüchen 1 bis 7,
wobei die Bildinhaltsklassifikations-/-identifikationsdaten (ICCI) derart erzeugt werden, dass sie für einen oder eine beliebige Kombination der nachfolgenden Bildmodi oder -typen beschreibend sind:

- Bewegungsabfolge,
- statische Bilder, insbesondere ohne Bewegung,
- Kameramodus,
- Filmmodus,
- Rauschpegel,
- Szenenänderung und
- Beleuchtungsbedingungen eines aktuellen Bildes, insbesondere dunkel, mittelmäßig dunkel, normal, mittelmäßig hell und/oder helles Bild.

**9.** Verfahren nach den Ansprüchen 1 bis 8, welches des Weiteren aufweist:

Durchführen eines Trainings des trainierbaren Klassifikationsverfahrens als überwachtes Training, wobei Zielinformation die Bildinhaltsklassifikations-/-identifikationsdaten (ICCI) sind und wobei die Eingabeinformation der Merkmalsvektor (FV) ist.

**10.** Videomodusklassifikationssystem,
welches in der Lage ist, ein Verfahren zur Videomodusklassifikation nach einem der vorangehenden Ansprüche 1 bis 9 auszuführen.

**11.** Computerprogrammerzeugnis,
mit einer Computerprogrammeinrichtung, die ausgebildet ist, ein Verfahren zur Videomodusklassifikation nach einem der Ansprüche 1 bis 9 auszuführen und zu realisieren, wenn es auf einem Computer oder einer digitalen Signalverarbeitungseinrichtung ausgeführt wird.

**12.** Computerlesbares Speichermedium,
welches ein Computerprogrammerzeugnis nach Anspruch 11 aufweist.

**Revendications**

**1.** Méthode de classification de mode vidéo, dans laquelle ladite vidéo comprend une séquence d'images (I), chacune desdites images (I) se composant de données d'image (ID) respectives, comprenant :

la génération d'un vecteur fonctionnel (FV) sur la base desdites données d'image (ID), ledit vecteur fonctionnel décrivant les fonctionnalités temporelles et/ou spatiales d'au moins une desdites images (I) ;
la génération de données de classification/identification de contenu d'image (ICCI) sur la base dudit vecteur fonctionnel (FV) et sur la base d'une méthode de classification à apprendre ;
la classification dudit mode vidéo sur la base desdites données de classification/identification de contenu d'image (ICCI).

**2.** Méthode selon la revendication 1,
dans laquelle ledit vecteur fonctionnel (FV) comprend un vecteur fonctionnel spatial (SFV), qui décrit les informations spatiales desdites données d'image (ID) d'au moins une desdites images (I).

**3.** Méthode selon la revendication 2,
dans laquelle lesdites informations spatiales sont générées pour contenir des informations relatives à au moins une fonctionnalité parmi la mesure du bruit (NM), le niveau d'image moyen (APL), l'analyse d'histogramme (HA) et d'autres fonctionnalités utilisées dans une analyse spatiale de contenu.

**4.** Méthode selon les revendications 1 à 3,
dans laquelle ledit vecteur fonctionnel (FV) comprend un vecteur fonctionnel temporel (TFV), décrivant les informations temporelles entre les images consécutives (I) de ladite séquence d'images (I).

**5.** Méthode selon la revendication 4,
dans laquelle lesdites informations temporelles sont générées pour contenir des informations relatives à au moins une fonctionnalité parmi l'estimation de mouvement (ME) et d'autres fonctionnalités utilisées dans une analyse temporelle de contenu.

**6.** Méthode selon l'une quelconque des revendications 1 à 5,
dans laquelle ladite méthode de classification à apprendre est basée sur un réseau neuronal artificiel (ANN).

**7.** Méthode selon l'une quelconque des revendications 1 à 5,
dans laquelle ladite méthode de classification à apprendre est basée sur un réseau de croyance bayésien (BNN).

**8.** Méthode selon les revendications 1 à 7,
dans laquelle lesdites données de classification/identification de contenu d'image (ICCI) sont générées pour être descriptives pour une ou toute combinaison des modes ou types d'image suivants :

- une séquence de mouvement,
- des images statiques, en particulier une absence de mouvement,
- un mode caméra,
- un mode film,
- un niveau de bruit,

- un changement de scène, et
- des conditions d'éclairage d'une image en cours, en particulier une image "sombre", "moyennement sombre", "normale", "moyennement claire" et/ou "claire".

**9.** Méthode selon les revendications 1 à 8, comprenant en outre :

l'exécution d'un apprentissage de ladite méthode de classification à apprendre comme un apprentissage supervisé, dans laquelle des informations cibles constituent lesdites données de classification/identification de contenu d'image (ICCI) et des informations d'entrée constituent ledit vecteur fonctionnel (FV).

**10.** Système de classification de mode vidéo,
qui est capable d'exécuter une méthode de classification de mode vidéo selon l'une quelconque des revendications précédentes 1 à 9.

**11.** Produit de programme informatique,
comprenant un moyen de programme informatique adapté pour exécuter et pour réaliser la méthode de classification de mode vidéo selon l'une quelconque des revendications 1 à 9, lorsqu'il est exécuté sur un ordinateur ou un moyen de traitement de signal numérique.

**12.** Support lisible par ordinateur,
comprenant un produit de programme informatique selon la revendication 11.

EP 1 850 271 B1

ID, I

```
            |
            v
  +-------------------+
  |    Input step     |  ~— S1
  +-------------------+
            |
     +------+
     |      |
     v      |
+-------------------+
|Image content      |
|classification/    |
|identification step|  S2
+-------------------+
     |         ICCI
     |          |
     v          v
  +-------------------+
  |Image improvement/ |
  | processing step   |  ~— S3
  +-------------------+
            |
            v
  +-------------------+
  |   output step     |  ~— S4
  +-------------------+
            |
            v
```

IID, O

# Fig. 1

Fig. 2

Image(s) → **Image Content Feature Analysis** → Feature Vector → **teaching-based Image Content Classifiaction/Identification** (e.g. ANN, etc.) → ICCI vector

I, ID

ICFA

FV

S2

ACS

ICCI

## Fig. 3

EP 1 850 271 B1

SCA  ICFA

Spatial
Content Analysis

spatial SFV
feature-vector

MUXSTF

FV

Image(s)

I, ID

MUX
Features

Feature
Vector

Temporal
Content Analysis

temporal TFV
feature-vector

TCA

*Image Content Feature Analysis*

EP 1 850 271 B1

Fig. 4

Fig. 5

Fig. 6

Fig. 7

EP 1 850 271 B1

Fig. 8

TV

OV

input
vector → ANN
(backpropagated learning) → output
vector

IV, FV

ANN

difference
vector

DV

Fig. 9

EP 1 850 271 B1

FRAMES with different
motion phases

Fig. 10

FIELDS with different
motion phases

Fig. 11

EP 1 850 271 B1

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9524017 A

**Non-patent literature cited in the description**

- **Wischermann G.** Das digitale Wetgate. Die dritte Noise-Reducer-Generation von Philips BTS. *Fernseh- und Kinotechnik,* 01 July 1996, vol. 50 (7), 387-390